# EUROPÄISCHE PATENTANMELDUNG

(11) **EP 3 926 704 A1**
(43) Veröffentlichungstag der Anmeldung: **22.12.2021**
(21) Anmeldenummer: 20180686.6
(22) Anmeldetag: 18.06.2020
(51) Int. Cl.: H01M 2/10, H01M 10/613, H01M 10/643, H01M 10/6557, H01M 10/6563, H01M 10/6566

(54) **BATTERIEMODUL MIT LUFTKÜHLUNG**

(71) Anmelder: VARTA Microbattery GmbH, 73479 Ellwangen Jagst (DE)
(72) Erfinder: Hoffmann, Tim, 73450 Neresheim (DE)
(74) Vertreter: Patentanwaltskanzlei Cartagena

(57) **Zusammenfassung**

Es wird ein Batteriemodul (100) mit Luftkühlung vorgeschlagen, wobei das Batteriemodul (100) mindestens zwei Batterieblöcke (10) aufweist. Die Batterieblöcke (10) umfassen jeweils eine Mehrzahl von zylindrischen Rundzellen (11), die in entsprechenden Aufnahmen (38, 39, 40) eines Zellhalters (30) angeordnet sind, wobei die Längsachsen der zylindrischen Rundzellen (11) parallel zueinander liegen. In den Zellhaltern (30) sind Luftdurchtrittsöffnungen (33) vorgesehen, durch die Luftdie Batterieblöcke (10) parallel zu den Längsachsen der Rundzellen (11) durchströmen kann. Die Batterieblöcke (10) sind mit Abstand aufeinandergestapelt, so dass sich zwischen benachbarten Batterieblöcken (10) in dem Stapel jeweils ein Stapelzwischenraum (18) ergibt. Das Batteriemodul (100) weist ein Gehäuse (13) auf, das den Stapel aus den Batterieblöcken (10) umfasst, wobei der Stapel von Wänden des Gehäuses (13) beabstandet ist, so dass sich zwischen endständigen Batterieblöcken (10) des Stapels und den Wänden zwei endständige Freiräume (19) ergeben. Das Gehäuse (13) weist mindestens einen Lufteinlass (14) und mindestens einen Luftauslass (15) auf. Dem Batteriemodul (100) ist ein Ventilator (20) zur Erzeugung eines Luftstroms (500) zwischen dem Lufteinlass (14) und dem Luftauslass (15) zugeordnet. Das Batteriemodul (100) weist Lenkmittel (16,17) auf, die gewährleisten, dass der Luftstrom ausgehend von mindestens einem Stapelzwischenraum (18) zwischen zwei benachbarten Batterieblöcken (10) durch die Luftdurchtrittsöffnungen (33) in den Zellhaltern (30) zwischen den zylindrischen Rundzellen (11) der einzelnen Batterieblöcke (10) hindurch und durch die endständigen Freiräume (19) in Richtung des Luftauslasses (15) geleitet wird.

## Beschreibung

Die vorliegende Erfindung betrifft ein Batteriemodul mit Luftkühlung, welches mindestens zwei Batterieblöcke mit jeweils einer Mehrzahl von zylindrischen Rundzellen umfasst. Weiterhin betrifft die Erfindung einen Zellhalter zur Anordnung von zylindrischen Rundzellen in Form eines Batterieblocks.

Bei Batteriemodulen handelt es sich vielfach um wieder aufladbare, elektrische Energiespeicher, die beispielsweise in automobilen Anwendungen aber auch in vielen anderen Bereichen vielfach verwendet werden. In einem Batteriemodul werden eine Vielzahl einzelner elektrochemischer Zellen zusammengeschaltet, um so die für verschiedene Anwendungen erforderlichen hohen Ströme und Spannungen bereitstellen zu können.

Jede elektrochemische Zelle im Sinne der vorliegenden Anmeldung umfasst mindestens eine positive und mindestens eine negative Elektrode, welche durch einen Separator voneinander getrennt sind. In elektrochemischen Zellen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zelle. Dieser lonenstrom durchquert den Separator und wird durch einen ionenleitenden Elektrolyten gewährleistet.

In sekundären (wieder aufladbaren) elektrochemischen Zellen ist diese Entladereaktion reversibel, es besteht also die Möglichkeit, die bei der Entladung erfolgte Umwandlung chemischer Energie in elektrische Energie umzukehren.

Eine in Batteriemodulen oftmals verwendete elektrochemische Zelle ist die Lithium-Ionen-Zelle. Diese umfasst Elektroden, die Lithium-Ionen reversibel aufnehmen und wieder abgeben können, sowie einen Lithium-Ionen enthaltenden Elektrolyten.

Bei elektrochemischen Zellen und insbesondere auch bei Lithium-Ionen-Zellen sind verschiedene Bauformen bekannt. Neben prismatischen Formen sind Knopfzellen und zylindrische Rundzellen weit verbreitet. Sowohl Knopfzellen als auch Rundzellen haben eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist.

Bei dem Betrieb von elektrochemischen Zellen und insbesondere bei dem Betrieb eines Batteriemoduls entsteht Wärme. Sowohl bei der Energieabgabe als auch beim Laden erwärmen sich die Zellen. Eine Überhitzung führt zu Beeinträchtigungen und Schädigungen der elektrochemischen Zellen. Allerdings kann auch eine zu niedrige Temperatur beispielsweise den Ladevorgang negativ beeinflussen. Für einen sicheren und schonenden Betrieb des Batteriemoduls sollte daher ein gewisser Betriebstemperaturbereich eingehalten werden, so dass Maßnahmen zur Temperierung von Batteriemodulen sinnvoll sind.

Es ist bekannt, Kühl- und Kältekreisläufe einzusetzen, um die sich im Betrieb erwärmenden elektrochemischen Zellen eines Batteriemoduls zu kühlen. Beispielsweise können Kühl- oder Kälteplatten verwendet werden, auf die die Batteriemodule mit ihrer Unterseite zur Wärmeabfuhr gepresst werden.

Andere Ansätze arbeiten mit der Einleitung eines flüssigen Kühlmediums direkt in das Batteriemodul. Aus der DE 10 2007 024 869 A ist beispielsweise ein Batteriemodul für Elektrogeräte bekannt, wobei ein Kühlmedium durch das Gehäuse des Moduls geleitet wird.

Die DE 10 2014 112 628 A1 beschreibt ein kühlbares Batteriemodul, wobei das Batteriemodul zwei in Abstand zueinander angeordnete Halteplatten sowie eine Mehrzahl elektrischer Rundzellen aufweist, die endseitig Durchlässe in den Halteplatten abgedichtet durchsetzen. Zwischen den Halteplatten ist ein von den elektrischen Zellen durchsetzter Raum gebildet, der zur Aufnahme eines elektrisch leitenden, die elektrischen Zellen umströmenden Kühlmittels gebildet ist. Die sich endseitig der elektrischen Zellen befindlichen Zellpole sind außerhalb dieses Raumes angeordnet. Bei dem Kühlmittel handelt es sich vorzugsweise um ein Kühlmittel auf Ethylen-Glykol-Basis.

Weiterhin ist eine Luftkühlung von Batteriemodulen bekannt. So beschreibt die WO 2013/023847 A1 ein Batteriemodul insbesondere für Kraftfahrzeuge mit einem Batteriezellenstapel aus vorzugsweise prismatischen Batteriezellen, wobei sich zwischen den Batteriezellen Luftkanäle befinden. Hierdurch soll eine ausreichende Kühlung der Batteriezellen mittels eines Luftstroms ermöglicht werden.

Die DE 10 2014 201 165 A1 schlägt ein Batteriemodul vor, welches eine Anzahl von elektrisch miteinander verschalteten Batteriezellen umfasst. Die einzelnen Batteriezellen werden durch eine Luftströmung temperiert, die Kanäle durchströmt, die sich im Wesentlichen entlang der Batteriezellen erstrecken. Die Batteriezellen sind in einzelnen Batteriezellenfächern eines Batteriezellenhalters untergebracht. In den Seitenwänden der Batteriezellenfächer befinden sich die Kanäle, die von der Kühlluft durchströmt werden. Für eine ausreichende Kühlwirkung muss das Material des Batteriezellenhalters gute Wärmeleiteigenschaften aufweisen.

Die DE 20 2018 005 411 U1 beschreibt ein Batteriemodul mit zylindrischen Rundzellen ohne ein herkömmlicherweise verwendetes Gehäuse, wobei die Gehäusefunktionen von einer selbsttragenden Haltematrix aus Kunststoff übernommen werden. Einzelne Module können zu sogenannten Batteriepacks zusammengesteckt werden. Hierbei kann die flächige Distanz zwischen zwei Ebenen der zusammengesteckten Module als Luftkanal für eine Luftkühlung genutzt werden.

Die bekannten Lösungen zur Kühlung eines Batteriemoduls mit zylindrischen Rundzellen liefern insbesondere bei einer Luftkühlung bisher keine befriedigenden Lösungen. Wenn die Luftströmung an einer Seite des Batteriemoduls eintritt, werden die Zellmäntel der Zellen direkt angeströmt. Hierdurch wird zwar eine gewisse Kühlwirkung zunächst erzielt, allerdings wird die Kühlluft von der Abwärme der Zellen bereits nahe am Lufteinlass erwärmt. Diese bereits erwärmte Kühlluft kühltdie im mittleren und hinteren Bereich des Moduls angeordneten Zellen weniger gut. Über das gesamte Batteriemodul bildet sich ein Temperaturgefälle vom Lufteinlass zum Luftauslass. Besonders nachteilig hierbei ist, dass die Temperaturverteilung über das gesamte Batteriemodul ungleichmäßig ist, sodass die Zellen in den unterschiedlichen Bereichen des Moduls unterschiedlich gut gekühlt werden. Bei den schlechter gekühlten Zellen wirkt sich dies negativ auf das Zyklenverhalten der Zellen und damit auf deren Lebensdauer aus, da wärmere bzw. schlecht gekühlte Zellen bekanntermaßen deutlich schneller altern als gut gekühlte Zellen. Im Laufe der Betriebsdauer altern daher die Zellen eines Batteriemoduls in unterschiedlicher Weise.

Die Erfindung stellt sich demgegenüber die Aufgabe, ein Batteriemodul mit Rundzellen mit einer verbesserten Luftkühlung bereitzustellen. Insbesondere soll durch die Luftkühlung eine gleichmäßige Kühlung aller Zellen des Moduls erreicht werden.

Diese Aufgabe wird durch ein Batteriemodul gelöst, wie es sich aus dem Anspruch 1 ergibt. Bevorzugte Ausführungsformen des Batteriemoduls sind Gegenstand der von Anspruch 1 abhängigen Ansprüche. Weiterhin wird diese Aufgabe durch einen Zellhalter für ein Batteriemodul gelöst, der sich aus dem weiteren unabhängigen Anspruch und, in bevorzugten Ausgestaltungen, aus dem davon abhängigen Anspruch ergibt.

Das erfindungsgemäße Batteriemodul arbeitet mit einer Luftkühlung und zeichnet sich in erster Linie durch die unmittelbar folgenden Merkmale a. bis h. aus:
a. das Batteriemodul weist mindestens zwei Batterieblöcke auf,
b. die Batterieblöcke umfassen jeweils eine Mehrzahl von zylindrischen Rundzellen, die in entsprechenden Aufnahmen eines Zellhalters angeordnet sind, wobei die Längsachsen der zylindrischen Rundzellen parallel zueinander liegen,
c. in den Zellhaltern sind Luftdurchtrittsöffnungen vorgesehen, durch die Luft die Batterieblöcke parallel zu den Längsachsen der Rundzellen durchströmen kann,
d. die Batterieblöcke sind mit Abstand aufeinandergestapelt, so dass sich zwischen benachbarten Batterieblöcken in dem Stapel jeweils ein Stapelzwischenraum ergibt,
e. das Batteriemodul weist ein Gehäuse auf, das den Stapel aus den Batterieblöcken umfasst, wobei der Stapel von Wänden des Gehäuses beabstandet ist, so dass sich zwischen endständigen Batterieblöcken des Stapels und den Wänden zwei endständige Freiräume ergeben,
f. das Gehäuse weist mindestens einen Lufteinlass und mindestens einen Luftauslass auf,
g. dem Batteriemodul ist ein Ventilator zur Erzeugung eines Luftstroms zwischen dem Lufteinlass und dem Luftauslass zugeordnet,
h. das Batteriemodul weist Lenkmittel auf, die gewährleisten, dass der Luftstrom ausgehend von mindestens einem Stapelzwischenraum zwischen zwei benachbarten Batterieblöcken durch die Luftdurchtrittsöffnungen in den Zellhaltern zwischen den zylindrischen Rundzellen der einzelnen Batterieblöcke hindurch und durch die endständigen Freiräume in Richtung des Luftauslasses geleitet wird.

Mit diesen Merkmalen des Batteriemoduls wird ein Kühlprinzip bereitgestellt, bei dem die zylindrischen Rundzellen des Batteriemoduls innerhalb des Moduls aktiv von einem Luftstrom gekühlt werden. Der Luftstrom selbst innerhalb des Batteriemoduls wird über einen herkömmlichen Ventilator erzeugt. Die Rundzellen und die umliegenden Gehäuseteile des Batteriemoduls sind dabei so angeordnet, dass der Luftstrom sowohl die Zellpole als auch die Zellmäntel kühlt.

Durch die Einleitung des Luftstroms in den Stapelzwischenraum zwischen zwei benachbarten Batterieblöcken erreicht der Luftstrom zunächst die Zellpole, die an den Stapelzwischenraum angrenzen. Anschließend gelangt die Luft durch die Luftdurchtrittsöffnungen in die Räume zwischen den Rundzellen und streicht dabei an den Zellmänteln vorbei. Die Luftdurchtrittsöffnungen sind vorzugsweise über die Fläche des Batterieblocks bzw. über die Fläche der Zellhalteroberfläche gleichmäßig verteilt. Die Kühlung der Zellmäntel erfolgt bei diesem Kühlprinzip gewissermaßen indirekt, indem der Luftstrom durch die Luftdurchtrittsöffnungen in den Zellhaltern an den Zellmänteln vorbeigeleitet wird. Die Luft durchstreicht den gesamten Batterieblock. Auf der gegenüberliegenden Seite des Batterieblocks tritt die Luft aus dem Batterieblock aus, um an dieser Seite das Batteriemodul über den Zwischenraum zwischen dieser Seite des Batterieblocks und der Innenwand des Gehäuses (endständiger Freiraum) in Richtung des Luftauslasses wieder zu verlassen.

Im Sinne dieser Anmeldung wird unter einem Batterieblock eine Anordnung von einer Mehrzahl von zylindrischen Rundzellen verstanden, deren Längsachsen parallel zueinander liegen. Vorzugsweise sind diese zylindrischen Rundzellen innerhalb des Batterieblocks in einem regelmäßigen Muster in einer Ebene angeordnet. Die Rundzellen innerhalb eines Batterieblocks sind miteinander verschaltet.

Unter einem Batteriemodul im Sinne der vorliegenden Anmeldung wird eine Zusammenfassung von zwei oder gegebenenfalls mehr Batterieblöcken verstanden. Diese zwei oder mehr Batterieblöcke befinden sich innerhalb eines Gehäuses und bilden eine Einheit. Ein Batteriemodul kann auch gleichbedeutend als Batteriepack bezeichnet werden.

In einer bevorzugten Ausgestaltung des Batteriemoduls kann das Batteriemodul zwei Batterieblöcke umfassen. Die endständigen Freiräume, also die Freiräume zwischen dem jeweiligen Batterieblock und der jeweiligen Wand des Gehäuses, können dabei die Oberseite und die Unterseite des Batteriemoduls bilden. Die Luft wird in den Stapelzwischenraum zwischen den Batterieblöcken, also gewissermaßen in die Mitte des Batteriemoduls, eingeleitet, läuft durch die Batterieblöcke an den Zellmänteln vorbei und verlässt die Batterieblöcke an der Ober- und der Unterseite des Batteriemoduls, wobei die Luft dann entlang der Ober- und Unterseite des Moduls in Richtung des Luftauslasses geleitet wird. In dieser Ausgestaltung befinden sich der Lufteinlass und der Luftauslass an den gegenüberliegenden Schmalseiten des Batteriemoduls.

Prinzipiell ist es jedoch auch möglich, dass mehr als zwei Batterieblöcke in einem Batteriemodul zusammengefasst sind.

Die Erzeugung des Luftstroms, der gemäß dem beschriebenen Prinzip durch das Batteriemodul geleitet wird, kann im Prinzip in beliebiger Weise erzeugt werden. Insbesondere ist es möglich, dass die Kühlluft durch entsprechende Anordnung von Ventilatoren in das Batteriemodul eingeblasen oder hindurchgesaugt wird. Es kann also ein Ventilator bzw. Lüfter entweder am Lufteinlass oder am Luftauslass angebracht werden, so dass die Richtung des Luftstroms anwendungsspezifisch gewählt werden kann. Prinzipiell ist auch eine Kombination aus Einblasen und Heraussaugen möglich. Als besonders geeignet hat sich die Anordnung eines Ventilators am Luftauslass erwiesen, mit dem die Luft durch das Batteriemodul hindurchgesogen wird. Dabei können verschiedene Bauformen von Ventilatoren eingesetzt werden.

Das erfindungsgemäße Batteriemodul ist für eine Verschaltung von einer Mehrzahl wieder aufladbarer, elektrischer Energiespeicherelemente, insbesondere einer Mehrzahl wieder aufladbarer, zylindrischer Rundzellen, vorgesehen. Die Rundzellen werden innerhalb eines Batterieblocks durch parallele Anordnung von deren Längsachsen vorzugsweise in einem regelmäßigen Muster derart angeordnet, dass zwischen den Zellmänteln der einzelnen Rundzellen regelmäßige Zwischenräume gebildet werden, durch die die Kühlluft streichen kann. Diese Anordnung der Rundzellen erfolgt mithilfe von Zellhaltern. Der Zellhalter weist insbesondere in den Bereichen, die an die Zwischenräume zwischen den einzelnen Rundzellen angrenzen, Luftdurchtrittsöffnungen auf, die einen Lufteintritt und einen Luftaustritt in die Zwischenräume zwischen den Zellmänteln ermöglichen. Durch die Lenkung des Luftstroms in der beschriebenen Weise werden die Rundzellen gleichermaßen von frischer Kühlluft gekühlt, da sie indirekt angeströmt werden. Dies bewirkt eine homogene Kühlung der Rundzellen über die gesamte Anordnung der Rundzellen innerhalb der Batterieblöcke, so dass durch diese homogene Kühlung eine gleichmäßige Kühlung für alle Rundzellen erreicht wird und damit die Lebensdauer aller Rundzellen in gleichmäßiger Weise optimiert wird.

Bei den Rundzellen selbst kann es sich im Prinzip um beliebige Rundzellen in beliebigen Dimensionen handeln. Bevorzugt werden für die Batterieblöcke handelsübliche Rundzellen eingesetzt.

Bevorzugt liegt die Höhe der Rundzellen im Bereich von 15 mm bis 150 mm. Der Durchmesser der zylindrischen Rundzellen liegt bevorzugt im Bereich von 10 mm bis 50 mm. Innerhalb dieser Bereiche sind Formfaktoren von beispielsweise 18 x 65 (Durchmesser x Höhe in mm) oder 21 x 70 (Durchmesser x Höhe in mm) besonders bevorzugt. Zylindrische Rundzellen mit diesen Formfaktoren, insbesondere mit dem Formfaktor 18 x 65, eignen sich in besonderer Weise zur Ausbildung des erfindungsgemäßen Batteriemoduls und können beispielsweise zur Stromversorgung elektrischer Antriebe von Kraftfahrzeugen, aber auch von Werkzeugen und für andere energieintensive Anwendungen genutzt werden.

Die Nennkapazität des als zylindrische Rundzelle ausgebildeten Energiespeicherelements beträgt in einer Ausführungsform als Lithium-Ionen-Zelle in der Regel bis zu 6000 mAh. Mit dem Formfaktor von beispielsweise 21 x 70 hat die Zelle in einer Ausführungsform als Lithium-Ionen-Zelle bevorzugt eine Nennkapazität im Bereich von 2000 mAh bis 5000 mAh, besonders bevorzugt im Bereich von 3000 bis 4500 mAh.

In der Europäischen Union sind Herstellerangaben zu Angaben betreffend die Nennkapazitäten von sekundären Energiespeicherelementen streng reglementiert. So haben etwa Angaben zur Nennkapazität von sekundären Nickel-Cadmium-Zellen auf Messungen gemäß den Normen IEC/EN 61951-1 und IEC/EN 60622, Angaben zur Nennkapazität von sekundären Nickel-Metallhydrid-Zellen auf Messungen gemäß der Norm IEC/EN 61951-2, Angaben zur Nennkapazität von sekundären Lithium-Zellen auf Messungen gemäß der Norm IEC/EN 61960 und Angaben zur Nennkapazität von sekundären Blei-Säure-Zellen auf Messungen gemäß der Norm IEC/EN 61056-1 zu basieren. Die Angaben zu Nennkapazitäten in der vorliegenden Anmeldung basieren bevorzugt ebenfalls auf diesen Normen.

Die Anzahl der in einem Batterieblock eines erfindungsgemäßen Batteriemoduls miteinander verschalteten Rundzellen kann im Prinzip beliebig gewählt werden. Vorzugsweise werden die einzelnen Rundzellen in Reihen angeordnet, wobei eine Mehrzahl von Reihen vorgesehen ist. Beispielsweise können Reihen von je zwölf Rundzellen vorgesehen sein, wobei insgesamt sechzehn dieser Reihen miteinanderzu einem Batterieblock verschaltetsind. Hieraus ergibt sich eine bevorzugte Anzahl von 192 Rundzellen innerhalb eines Batterieblocks.

Je nach Anwendung und benötigtem Energiebedarf können mehrere erfindungsgemäße Energiemodule in Form von einzelnen Racks oder Ähnlichem zusammengefasst werden.

In einer besonders bevorzugten Ausgestaltung des erfindungsgemäßen Batteriemoduls zeichnet sich das Batteriemodul durch das folgende zusätzliche Merkmal aus:
a. die Lenkmittel sind umlaufend an drei Seiten in dem Stapelzwischenraum zwischen zwei aufeinander liegenden Batterieblöcken und/oder umlaufend an drei Seiten in dem endständigen Freiraum zwischen einem endständigen Batterieblock eines Stapels und derWand des Gehäuses angeordnet.

Durch die Ausgestaltung der Lenkmittel in dieser Form wird gewissermaßen ein dreiseitiger schmaler Rahmen in dem Bereich zwischen aufeinanderliegenden Batterieblöcken und in dem Bereich zwischen einem endständigen Batterieblock und der jeweiligen Wand des Gehäuses bereitgestellt. Die Lenkmittel sind dabei so ausgestaltet, dass sie einen Luftdurchtritt verhindern. An der jeweils offenen Seite des dreiseitigen Rahmens ist ein Luftdurchtritt möglich.

In besonders bevorzugter Weise sind die Lenkmittel gemäß mindestens einem der folgenden Merkmale ausgestaltet:
a. die Lenkmittel in dem Stapelzwischenraum zwischen zwei aufeinander liegenden Batterieblöcken lassen die Seite des Stapels frei, die dem Lufteinlass des Gehäuses zugewandt ist,
b. die Lenkmittel in dem endständigen Freiraum zwischen einem endständigen Batterieblock des Stapels und den Wänden des Gehäuses lassen die Seite des Stapels frei, die dem Luftauslass des Gehäuses zugewandt ist.

Vorzugsweise sind dabei die vorgenannten Merkmale a. und b. gemeinsam verwirklicht.

Durch diese Anordnung der Lenkmittel wird in besonders vorteilhafter Weise erreicht, dass die Luft, die durch den Lufteinlass in das Batteriemodul einströmt, in den Stapelzwischenraum gelenkt wird. Durch die Begrenzung an den drei übrigen Seiten des Stapelzwischenraums wird die Luft in die Batterieblöcke hineingezwungen und durchstreicht die Räume zwischen den einzelnen Rundzellen eines Batterieblocks. Auf der anderen Seite des Batterieblocks verlässt die Luft die Batterieblöcke. Durch die in diesem endständigen Freiraum angeordneten Lenkmittel wird die Luft in Richtung des Luftauslasses geleitet, da die drei übrigen Seiten in dem endständigen Freiraum durch die Lenkmittel geschlossen sind.

Im Hinblick auf diese Lenkmittel ist das Batteriemodul vorzugsweise durch das folgende zusätzliche Merkmal gekennzeichnet:
a. die Lenkmittel sind Abdichtmittel, die von einem flexiblen Material, vorzugsweise von einen aufgeschäumten Kunststoff, gebildet sind.

Durch die Ausgestaltung der Lenkmittel in Form eines flexiblen Materials, beispielsweise in Form von aufgeschäumtem Kunststoff (Schaumstoff), wird zum einen erreicht, dass der Luftdurchtritt in diesen Bereichen zuverlässig verhindert wird. Zum anderen wird durch das flexible Material eine gewisse Pufferwirkung erreicht, so dass während der Montage des erfindungsgemäßen Batteriemoduls die nicht völlig ebenen Oberflächen der Batteriemodule zuverlässig abgedichtet werden. Zudem ist durch die Ausgestaltung der Lenkmittel als dreiseitiger Rahmen beispielsweise aus Schaumstoff eine Montage der Lenkmittel in sehr einfacher und automatisierbarer Weise möglich. Ein entsprechend vorgeschnittener Rahmen aus Schaumstoff, also gewissermaßen drei Streifen aus Schaumstoff in rechtwinkliger Anordnung, können dabei auf die Batteriemodule bzw. die entsprechenden Innenseiten des Gehäuses aufgelegt werden. Durch Zusammensetzen und Fixieren der Batteriemodule mit dem Gehäuse wird die gewünschte Abdichtung und Lenkung des Luftstroms in einfacher Weise erreicht.

In bevorzugter Weise zeichnet sich der bzw. zeichnen sich die Zellhalter des Batteriemoduls, mit denen die Batterieblöcke gebildet werden, durch das folgende zusätzliche Merkmal aus:
a. der Zellhalter eines Batterieblocks ist zweiteilig mit einem ersten Zellhalterteil und einem zweiten Zellhalterteil ausgebildet, wobei der erste Zellhalterteil und der zweite Zellhalterteil jeweils die einander gegenüberliegenden Stirnseiten der Rundzellen eines Batterieblocks umfassen.

Mit einer solchen Ausgestaltung des Zellhalters in zweiteiliger Form ist es in besonders einfacher und praktikabler Weise möglich, die Rundzellen eines Batterieblocks in geeigneter Weise anzuordnen und zu fixieren. Diese Ausgestaltung des Zellhalters erlaubt dabei eine besonders einfache Montage, die auch einer Automatisierung zugänglich ist. So können insbesondere die Rundzellen in eines der Zellhalterteile, insbesondere in einen unteren Zellhalterteil, von Hand oder auch maschinell einsortiert werden. Anschließend kann der zweite Zellhalterteil, insbesondere ein oberer Zellhalterteil, aufgesetzt und in geeigneter Weise fixiert werden, so dass die Rundzellen innerhalb des Batterieblocks zuverlässig in dem gewünschten Muster bzw. der gewünschten Anordnung gehalten werden.

In besonders bevorzugter Weise zeichnet sich das Batteriemodul im Hinblick auf diese Ausgestaltung des Zellhalters durch das folgende zusätzliche Merkmal aus:
a. zur Fixierung des ersten Zellhalterteils und des zweiten Zellhalterteils sind Schraubverbindungen, insbesondere Schraubverbindungen mit selbstschneidenden Schrauben, vorgesehen.

Bei dieser bevorzugten Fixierung mittels Schraubverbindungen sind zweckmäßigerweise in dem Zellhalter entsprechende Kanäle vorgesehen, in die die Schraubverbindungen eingreifen. Insbesondere können Kanäle vorgesehen sein, die die gesamte Höhe des jeweiligen Zellhalterteils durchlaufen. Bei der Zusammenfügung des ersten Zellhalterteils und des zweiten Zellhalterteils werden diese Kanäle, die an mehreren Stellen des Zellhalters vorgesehen sein können, derart zusammengeführt, dass sie einen durchgängigen Kanal über die Höhe des resultierenden Batterieblocks bilden, in den die verbindenden Schraubverbindungen eingreifen können. Die Verwendung von selbstschneidenden Schrauben ist dabei besonders vorteilhaft, da auf Gewinde verzichtet werden kann, so dass die Fertigung entsprechender Zellhalter besonders einfach und kostengünstig ist.

In einerweiteren besonders bevorzugten Ausgestaltungzeichnetsich das Batteriemodul im Hinblick auf den Zellhalter durch das folgende zusätzliche Merkmal aus:
a. die Zellhalter weisen Aussparungen, insbesondere kreisförmige Aussparungen, zur elektrischen Kontaktierung der Rundzellen auf.

Die Anordnung von entsprechenden Aussparungen, insbesondere von kreisförmigen Aussparungen, erleichtert neben der Möglichkeit zur elektrischen Kontaktierung der Rundzellen auch die Einsortierung der Rundzellen in den Zellhalter während der Montage des Batteriemoduls. Diese Aussparungen geben gewissermaßen das Muster vor, in dem die Rundzellen auf der Fläche des Zellhalters anzuordnen sind. Die Rundzellen werden dabei mit dem entsprechenden Pol in diese Aussparungen eingesetzt. Hierbei kann es vorgesehen sein, dass größere Aussparungen, insbesondere größere kreisförmige Aussparungen, für die Minuspole der Rundzellen und kleinere Aussparungen, insbesondere kleinere kreisförmige Aussparungen, für die erhabenen bzw. vorragenden Pluspole der Rundzellen vorgesehen sind. Somit wird zum einen die Orientierung der Rundzellen in dem Zellhalter durch die entsprechenden Aussparungen vorgegeben. Zum anderen wird durch die kleineren Aussparungen, in die die Pluspole der Rundzellen eingreifen können, eine erste Fixierung der Rundzellen bereits während der Montage des Batterieblocks erreicht.

Im Hinblick auf den Zellhalter zeichnet sich das erfindungsgemäße Batteriemodul vorzugsweise weiterhin durch das folgende zusätzliche Merkmal aus:
a. die Bereiche der Luftdurchtrittsöffnungen eines Zellhalters werden jeweils von einem Stutzen zur Ausbildung von Lufteintritts- und Luftaustrittskanälen gebildet, wobei jeweils ein Stutzen an drei Rundzellen des jeweiligen Batterieblocks angrenzt.

Die Stutzen ragen in das Innere des Zellhalters und sind deutlich kürzer als die Länge des zylindrischen Grundkörpers der Rundzellen. So kann es beispielsweise vorgesehen sein, dass die Länge der Stutzen des oberen Zellhalterteils und die Länge der Stutzen des unteren Zellhalterteils zusammengenommen ein Drittel oder weniger der Länge der zwischen diesen Stutzen fixierten Rundzellen abdecken. Auf diese Weise wird erreicht, dass ein großer Anteil der Zellmantelfläche der Rundzellen von der durchströmenden Luft frei umflossen wird.

Durch die Ausgestaltung der Luftdurchtrittsöffnungen eines Zellhalters in Form eines Stutzens wird zum einen erreicht, dass die Lenkung des Luftstroms in diesen Bereichen kanalisiert wird und dass dadurch eine besonders effektive Leitung des Luftstroms gemäß dem beschriebenen Prinzip erreicht wird. Zum anderen wird durch die Ausgestaltung dieser Bereiche in Form von Stutzen eine einfache Halterung der Rundzellen durch den Zellhalter erreicht. Indem jeweils drei Rundzellen an einen Stutzen angrenzen, wird eine Begrenzung und Fixierung der Rundzellen in der gewünschten Position erreicht, ohne dass weitere Halterungsmittel erforderlich wären. Die Stutzen bilden damit zusammen mit den bevorzugterweise vorgesehenen Aussparungen in dem Zellhalter in dieser Ausführungsform die Aufnahmen des Zellhalters für die Rundzellen gemäß dem Merkmal b. des Hauptanspruchs.

Die Außengeometrie der Stutzen kann einen kreisrunden Umfang aufweisen. Diese einfache Ausgestaltung der Stutzen reicht bereits aus, um eine effektive Halterung und Fixierung der Rundzellen in dem gewünschten Muster zu erreichen. In anderen Ausgestaltungen kann es beispielsweise vorgesehen sein, einen dreieckigen Außenumfang der Stutzen zu wählen, wodurch eine noch passgenauere Anpassung an die äußere Form der Rundzellen möglich ist. Beispielsweise kann eine dreieckige Grundform des Außenumfangs mit konkaven, also nach innen gewölbten Seitenflächen vorgesehen sein, wodurch eine maximal angepasste Geometrie für die Halterung der angrenzenden Rundzellen erreicht wird.

Im Hinblick auf den Zellhalter im Bereich eines solchen Stutzens zeichnet sich das erfindungsgemäße Batteriemodul in bevorzugter Weise durch das folgende zusätzliche Merkmal aus:
a. an dem den Rundzellen abgewandten Ende des Stutzens ist eine Lochscheibe angeordnet.

Die Lochscheibe gewährleistet dabei zum einen den Luftdurchtritt in diesem Bereich, wobei zweckmäßigerweise ein zentrales Loch in der Lochscheibe vorgesehen ist, das den Lufteintritt bzw. Luftaustritt in bzw. aus dem Stutzen erlaubt. Darüber hinaus ist die Lochscheibe so ausgestaltet, dass sie eine weitergehende Fixierung der Rundzellen innerhalb des Batterieblocks bzw. in dem Zellhalter ermöglicht. Hierfür ist der Durchmesser der Lochscheibe vorzugsweise so gewählt, dass die Lochscheibe teilweise den Bereich des Zellhalters überragt, in dem eine Aussparung zur Kontaktierung der Rundzellen vorgesehen ist. Durch ein solches Überragen von derartigen Aussparungen wird verhindert, dass die Rundzelle, die im Bereich dieser Aussparung angeordnet ist, durch die Aussparung hindurchrutschen kann. Dies ist insbesondere bei den weiter oben beschriebenen größeren kreisförmigen Aussparungen sehr vorteilhaft, die für die Aufnahme der Minuspole der Rundzellen vorgesehen sind und die in ihrer Größe etwa dem Durchmesser des zylindrischen Körpers der Rundzellen entsprechen können.

In anderen Ausgestaltungen des Zellhalters, in denen gegebenenfalls eine Ausführung der Luftdurchtrittsöffnungen ohne die beschriebenen Stutzen realisiert ist, können ebenfalls derartige Lochscheiben vorhanden sein, die einer Halterung der Rundzellen dienen.

Weiterhin können die Lochscheiben im Bereich der Luftdurchtrittsöffnungen bzw. im Bereich der Stutzen hilfreich sein, um die für eine spätere Kontaktierung im Laufe der Fertigung gegebenenfalls erforderliche Montage von Kontaktierungsblechen zu erleichtern. Derartige Kontaktierungsbleche können beispielsweise entsprechende gegengleiche Aussparungen aufweisen, die den Lochscheiben entsprechen. Auf diese Weise können die Kontaktierungsbleche entsprechend aufgelegt und montiert werden, wobei die richtige Orientierung und Fixierung der Kontaktierungsbleche durch die Lochscheiben des Zellhalters und die entsprechenden Aussparungen in den Kontaktierungsblechen vorgegeben ist.

In einer weiteren besonders bevorzugten Ausgestaltung des erfindungsgemäßen Batteriemoduls zeichnet sich das Batteriemodul im Hinblick auf den Zellhalter durch das folgende zusätzliche Merkmal aus:
a. die Zellhalter weisen Abstandshalter, insbesondere Abstandshalter in Form von Erhebungen, zur Beabstandung von aufeinander gestapelten Batterieblöcken und/oder zur Beabstandung des Stapels aus Batterieblöcken zu Wänden des Gehäuses auf.

Durch derartige Abstandshalter können in besonders einfacher Weise die erforderlichen Räume für den vorgesehenen Luftfluss bereitgestellt werden. Insbesondere können durch derartige Abstandshalter der oder die Stapelzwischenräume zwischen aufeinandergestapelten Batterieblöcken und die endständigen Freiräume zwischen einem endständigen Batterieblock und der entsprechenden Wand des Gehäuses des Batteriemoduls hergestellt werden. Diese Abstandshalter sind dabei integraler Bestandteil der Zellhalter, so dass keine weiteren Bauteile zur Bewerkstelligung dieser Abstände bzw. zur Realisierungderentsprechenden Räume innerhalb des Batteriemoduls bei der Montage erforderlich sind. Dies erleichtert die Montage des Batteriemoduls. Dabei kann es vorgesehen sein, dass die Abstandshalter sich in das Muster der Luftdurchtrittsöffnungen einfügen.

In einer weiteren besonders bevorzugten Ausgestaltung im Hinblick auf diese Abstandshalter können die Bereiche der Abstandshalter darüber hinaus genutzt werden, um in diesen Bereichen geeignete Ausgestaltungen bereitzustellen, um eine Fixierung und vorzugsweise eine Verschraubung der Zellhalterteile eines Batterieblocks miteinander und gegebenenfalls die Fixierung des gesamten Moduls einschließlich des Gehäuses zu realisieren. Insbesondere können hierfür im Bereich der Abstandshalter die bereits erläuterten durchgängigen Kanäle bereitgestellt werden, die für eine Verschraubung, vorzugsweise mittels selbstschneidenden Schrauben, geeignet sind. Wenn die Abstandshalter in das Muster der Luftdurchtrittsöffnungen des Zellhalters eingeordnet werden und die Abstandshalter mit einem Kanal zur Fixierung kombiniert werden, wird in diesem Fall eine Luftdurchtrittsöffnung durch einen Abstandshalter ersetzt.

Je nach Dimensionierung und Anwendungsfall sind vorteilhafterweise mehrere Abstandshalter pro Zellhalter bzw. pro Batterieblock vorgesehen, um die Räume für den Luftstrom zu gewährleisten. Beispielsweise können zwölf Abstandshalter, die gleichmäßig über die Fläche des Zellhalters bzw. des Batterieblocks verteilt sind, vorgesehen sein. Vorzugsweise stellen diese zwölf Abstandshalter gleichzeitig die Verschraubungsbereiche dar. Dabei können beispielsweise sechs Kanäle für eine Verschraubung des oberen und des unteren Zellhalterteils eines Batteriemoduls verwendet werden. Die anderen sechs Kanäle können für eine Fixierung des gesamten Batteriemoduls, also beispielsweise für eine Verschraubung von zwei Batterieblöcken mit dem Gehäuse, eingesetzt werden.

Das erfindungsgemäße Batteriemodul zeichnet sich im Hinblick auf den Zellhalter in besonders bevorzugter Weise durch das folgende zusätzliche Merkmal aus:
a. die Zellhalter sind aus Kunststoff, insbesondere aus einem Polycarbonat oder einem Gemisch mit Polycarbonat, gefertigt.

Die Fertigung des Zellhalters aus Kunststoff ist besonders geeignet, da die erforderlichen Geometrien des Zellhalters in einfacher und kostengünstiger Weise hergestellt werden können, beispielsweise durch Spritzguss oder andere geeignete Verfahren. Zudem handelt es sich bei Kunststoff um einen leichten Werkstoff, der nicht wesentlich zum Gewicht des kompletten Batteriemoduls beiträgt. Weiterhin ist Kunststoff elektrisch isolierend, so dass Kunststoff in besonderer Weise für das Batteriemodul geeignet ist. Beispielsweise kann der Zellhalter aus Polycarbonat oder einem Gemisch mit Polycarbonat gefertigt sein. Es eignen sich jedoch auch andere Kunststoffe oder gegebenenfalls andere Materialien für die Fertigung des Zellhalters.

In besonders bevorzugter Weise zeichnet sich das erfindungsgemäße Batteriemodul durch das folgende zusätzliche Merkmal aus:
a. die Rundzellen eines Batterieblocks sind in versetzten Reihen angeordnet, wobei die Rundzellen von benachbarten Reihen mit entgegengesetzter Polarität nebeneinander liegen.

Diese Anordnung und Orientierung der Rundzellen ist in besonders vorteilhafter Weise für die Verschaltung der Rundzellen geeignet. Durch diese Anordnung können jeweils positive und negative Pole von versetzt benachbarten Zellen gewissermaßen im Zickzackmuster miteinander verschaltet werden. Wenn beispielsweise jeweils zwölf Rundzellen parallel in einer Reihe angeordnet sind und in einer benachbarten Reihe versetzt dazu zwölf Rundzellen mit entgegengesetzter Polarität angeordnet sind, können bei insgesamt 192 derart angeordneten Rundzellen jeweils sechzehn Rundzellen seriell miteinander verschaltet werden (16S12P).

In besonders bevorzugter Weise handelt es sich bei den Rundzellen um sekundäre Lithium-Ionen-Zellen, die bereits vielfach für Verwendungen in Form von Batteriemodulen zum Einsatz kommen.

Für den Betrieb von Batteriemodulen ist im Allgemeinen ein Batteriemanagementsystem sinnvoll und/oder erforderlich, um die verschiedenen Parameter bei dem Betrieb eines Batteriemoduls zu steuern und/oder zu regeln. Zweckmäßigerweise ist es daher vorgesehen, dass das erfindungsgemäße Batteriemodul elektronische Bauelemente in an sich bekannter Weise aufweist und/oder dass das erfindungsgemäße Batteriemodul für einen Betrieb mit einem Batteriemanagementsystem in an sich bekannter Weise vorgesehen ist. Dabei dient das Batteriemanagementsystem der Überwachung und Sicherheit das Batteriemoduls. Insbesondere kann das Batteriemanagementsystem den Batterieladezustand (*State of Charge* - SOC) und den Alterungszustand (*State of Health* - SOH) überwachen. Wichtige Parameter füreine Überwachung sind die Zellspannungen, die Zellströme und die Zelltemperaturen. Durch die Überwachung derartiger Parameter kann der sichere Betrieb des Batteriemoduls gewährleistet werden, indem zum Beispiel eine Abschaltung bei Über- oder Unterspannung, bei Über- oder Untertemperatur oder das Angleichen des Ladezustands von einzelnen Rundzellen des Batteriemoduls erfolgt.

Die Erfindung umfasst weiterhin einen Zellhalter zur Aufnahme einer Mehrzahl von zylindrischen Rundzellen zur Anordnung der zylindrischen Rundzellen in Form eines Batterieblocks. Dieser Zellhalter zeichnet sich durch die unmittelbar folgenden Merkmale a. und b. aus:
a. der Zellhalter umfasst Aufnahmen zur Halterung der zylindrischen Rundzellen, wobei die Längsachsen der zylindrischen Rundzellen parallel zueinander liegen,
b. in dem Zellhalter sind Luftdurchtrittsöffnungen vorgesehen, durch die Luft den Batterieblock parallel zu den Längsachsen der Rundzellen durchströmen kann.

Dieser Zellhalter ist insbesondere zur Halterung der zylindrischen Rundzellen in einem Batterieblock, der in einem Batteriemodul gemäß der obigen Beschreibung eingesetzt wird, vorgesehen. Mit diesem Zellhalter lässt sich das oben beschriebene Kühlprinzip für eine Luftkühlung des Batteriemoduls verwirklichen, wobei der Zellhalter insbesondere in Kombination mit den oben beschriebenen Lenkmitteln zur Steuerung des Luftflusses innerhalb des Batteriemoduls eingesetzt werden kann.

Mit besonderem Vorteil ist der Zellhalter zweiteilig ausgestaltet, wobei ein erster Zellhalterteil und ein zweiter Zellhalterteil jeweils die einander gegenüberliegenden Stirnseiten der Rundzellen des Batterieblocks umfassen.

Zur Fixierung der einzelnen Teile des Zellhalters sind vorzugsweise Schraubverbindungen vorgesehen.

Der Zellhalter ist in besonders bevorzugter Weise mit einer Mehrzahl von Aussparungen versehen, die zur elektrischen Kontaktierung der Rundzellen dienen, wobei gegebenenfalls unterschiedlich große Aussparungen für die Minuspole und die Pluspole der Rundzellen vorgesehen sein können.

Die Bereiche der Luftdurchtrittsöffnungen des Zellhalters werden vorzugsweise von Stutzen gebildet, die in das Innere des Zellhalters ragen. An die Stutzen des Zellhalters grenzen im montierten Zustand des Batterieblocks jeweils drei Rundzellen an, so dass die Stutzen ein Halterungsmittel für die Rundzellen bilden.

Vorzugsweise wird das von den Rundzellen abgewandte Ende des Stutzens von einer Lochscheibe gebildet, die neben der Luftdurchtrittsfunktion zugleich eine Fixierungsfunktion für die Rundzellen in dem Batterieblock übernimmt.

Weiterhin ist es bevorzugt, dass der Zellhalter Abstandshalter insbesondere in Form von Erhebungen aufweist, um die für die Luftführung erforderlichen Räume zwischen aufeinandergestapelten Batterieblöcken (Stapelzwischenräume) und zwischen endständigen Batterieblöcken des Stapels und dem Gehäuse (endständige Freiräume) zu realisieren.

Vorzugsweise ist der Zellhalter aus Kunststoff gefertigt, beispielsweise aus einem Polycarbonat oder einem Gemisch mit Polycarbonat.

Darüber hinaus ist der Zellhalter vorzugsweise so gestaltet, dass die Rundzellen des Batterieblocks in versetzten Reihen angeordnet werden können, wobei die Rundzellen von benachbarten Reihen mit entgegengesetzter Polarität nebeneinanderliegen. Dies kann beispielsweise dadurch erreicht werden, dass ein entsprechendes Muster von größeren und kleineren kreisförmigen Aussparungen in dem Zellhalter vorgesehen ist, wobei die größeren Aussparungen für das Einsetzen einer Rundzelle mit einer Orientierung des Minuspols zu dem jeweiligen Teil des Zellhalters und eine Aussparung mit kleinerem Durchmesser zum Einsetzen einer Rundzelle mit der Orientierung des Pluspols zum jeweiligen Teil des Zellhalters vorgesehen ist. Bezüglich weiterer Merkmale und Vorteile dieses Zellhalters wird auf die obige Beschreibung verwiesen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen:
- Fig. 1: eine schematische Schnittdarstellung durch ein erfindungsgemäßes Batteriemodul zur Illustrierung der Lenkung des Luftflusses;
- Fig. 2: isometrische Ansicht eines Batterieblocks als Bestandteil des erfindungsgemäßen Batteriemoduls in schräger Aufsicht;
- Fig. 3: Detaildarstellung eines Ausschnitts als Aufsicht auf den Batterieblock aus Fig. 2;
- Fig. 4: Schnittdarstellung durch den Batterieblock aus Fig. 2 entlang A-A;
- Fig. 5: Aufsicht (A) und Seitenansicht (B) eines unteren Zellhalterteils;
- Fig. 6: Aufsicht (A) und Seitenansicht (B) eines oberen Zellhalterteils;
- Fig. 7: isometrische Schrägdarstellung des unteren Gehäuseteils eines erfindungsgemäßen Batteriemoduls;
- Fig. 8: isometrische Schrägdarstellung des unteren Gehäuseteils aus Fig. 7 mit einem eingesetzten, ersten Batterieblock;
- Fig. 9: isometrische Schrägdarstellung des unteren Gehäuseteils aus Fig. 7 mit zwei eingesetzten Batterieblöcken und
- Fig. 10: isometrische Schrägdarstellung eines montierten Batteriemoduls.

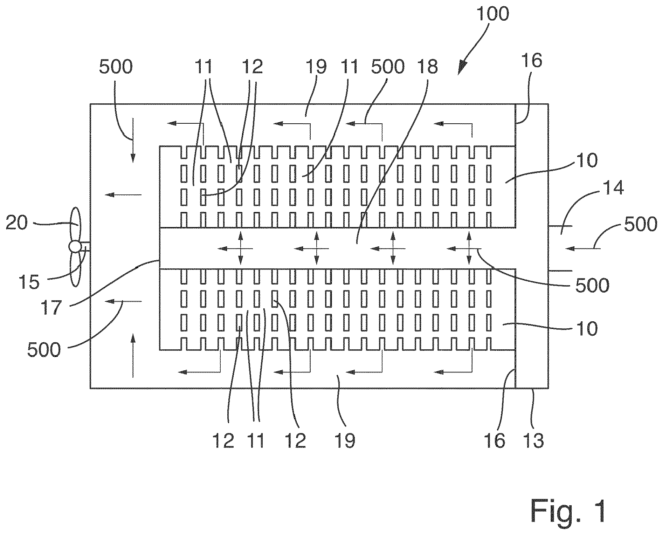

**Fig. 1** zeigt in einer schematischen Schnittansicht ein erfindungsgemäßes Batteriemodul 100 mit zwei Batterieblöcken 10 und einem Gehäuse 13. Jeder Batterieblock 10 besteht aus einer Mehrzahl von parallel zueinander angeordneten zylindrischen Rundzellen 11. Die Rundzellen 11 sind derart angeordnet, dass sich zwischen den einzelnen Rundzellen Räume 12 ergeben, durch die Luftdie Batterieblöcke 10 parallel zu den Längsachsen der Rundzellen 11 durchströmen kann. In dem Gehäuse 13 des Batteriemoduls sind ein Lufteinlass 14 sowie ein Luftauslass 15 vorgesehen. Durch entsprechende Lenkmittel 16 und 17 wird der Luftstrom (Pfeile 500) so geführt, dass er zunächst über den Lufteinlass 14 zwischen die zwei Batterieblöcke 10 in den Stapelzwischenraum 18 geleitet wird. Von diesem Stapelzwischenraum 18 aus gelangt die Luft durch die Batterieblöcke 10 entlang der Räume 12 zwischen den Rundzellen 11 hindurch in die endständigen Freiräume 19, die sich auf der Ober- und Unterseite des Batteriemoduls 100 zwischen den jeweiligen Batterieblöcken 10 und der Wand des Gehäuses 13 ergeben. Über diese endständigen Freiräume 19 gelangt die Luft in Richtung des Luftauslasses 15 und verlässt das Batteriemodul 100. In dieser Ausgestaltung wird der Luftstrom 500 durch einen am Luftauslass 15 angeordneten Ventilator 20 angetrieben.

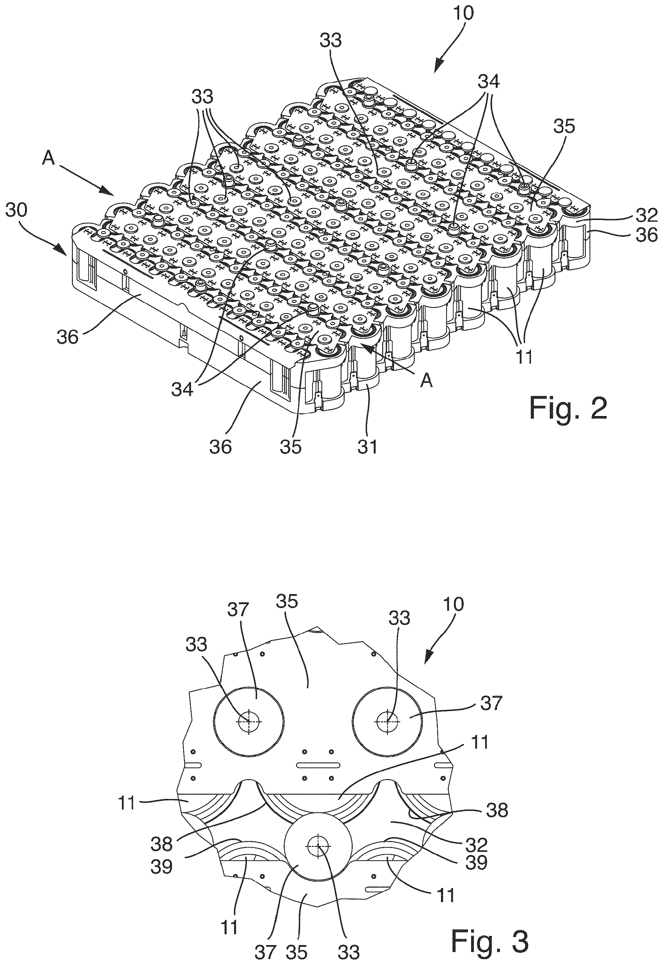

**Fig. 2** zeigt in isometrischer Schrägansicht einen Batterieblock 10 in einer beispielhaften Ausführungsform. Die Rundzellen 11 sind in einem regelmäßigen Muster in mehreren Reihen angeordnet und werden dabei von einem Zellhalter 30 gehalten. Der Zellhalter 30 ist mehrteilig mit einem unteren Zellhalterteil 31 und einem oberen Zellhalterteil 32 ausgestaltet. Die Oberseite und die Unterseite des Zellhalters 30 bzw. der obere Zellhalterteil 32 und der untere Zellhalterteil 31 ist mit einer Mehrzahl von Luftdurchtrittsöffnungen 33 versehen, wobei die Luftdurchtrittsöffnungen 33 so ausgestaltet sind, dass Luft in die Zwischenräume zwischen den einzelnen Rundzellen 11 gelangen kann. Hierbei ist für jeden Zwischenraum zwischen den einzelnen Rundzellen 11 jeweils auf beiden Seiten des Zellhalters 30 eine Luftdurchtrittsöffnung 33 vorgesehen, so dass die Luft die Batterieblöcke 10 parallel zu den Längsachsen der Rundzellen 11 durchströmen kann.

Auf der Oberseite und der Unterseite des Zellhalters 30 bzw. auf dem oberen Zellhalterteil 32 und dem unteren Zellhalterteil 31 ist jeweils eine Mehrzahl von Abstandshaltern 34 in Form von Erhebungen vorgesehen. Die Abstandshalter 34 ordnen sich in das Muster der Luftdurchtrittsöffnungen 33 ein. In dieser Ausgestaltung des Batterieblocks 10 sind es auf jeder Seite des Zellhalters 30 insgesamt zwölf Abstandshalter 34. Durch diese Abstandshalter 34 werden die erforderlichen Räume für den Luftstrom zwischen aufeinandergestapelten Batterieblöcken 10 und zwischen den Batterieblöcken 10 und dem Gehäuse 13 des Batteriemoduls realisiert. Auf der Oberseite und der Unterseite des Batterieblocks 10 sind streifenförmige Kontaktierungsbleche 35 vorgesehen, mit deren Hilfe die Kontaktierung der einzelnen Rundzellen 11 und deren Verschaltung erfolgt.

Die Anordnung der einzelnen Rundzellen in diesem Ausführungsbeispiel erfolgt in Reihen von jeweils zwölf Rundzellen 11, die jeweils in dergleichen Orientierung angeordnet sind. Dazu versetzt sind in der benachbarten Reihe ebenfalls zwölf Rundzellen, jedoch mit umgekehrter Polarität angeordnet. Insgesamt sind 16 solcher Reihen vorgesehen, wobei jeweils eine serielle Verschaltung von sechzehn Rundzellen 11 über die Reihen hinweg im Zickzack vorgesehen ist.

Zur Stabilisierung des Zellhalters 30 weisen das obere Zellhalterteil 32 und das untere Zellhalterteil 31 Abstandshalterelemente 36 in den seitlichen Bereichen auf.

**Fig. 3** zeigt eine Detailansicht einer Aufsicht auf den Zellblock 10 aus Fig. 2. Dargestellt sind drei Luftdurchtrittsöffnungen 33, die jeweils von einer Lochscheibe 37 auf der Oberseite des hier gezeigten oberen Zellhalterteils 32 angeordnet sind. Im oberen Zellhalterteil 32 sind kreisförmige Aussparungen 38 und 39 vorgesehen, in die die einzelnen Rundzellen 11 eingesetzt sind. Hierbei sind für die Minuspole der Rundzellen 11 die größeren Aussparungen 38 und für die hervorstehenden Pluspole der Rundzellen 11 kleinere kreisförmige Aussparungen 39 vorgesehen, in die die Pluspole eingreifen. Die Lochscheiben 37 im Bereich der Luftdurchtrittsöffnungen 33 überragen die Aussparungen 38 und gegebenenfalls auch die kleineren Aussparungen 39 und verhindern damit, dass die Rundzellen 11 aus den Aussparungen 38, 39 insbesondere während der Montage herausfallen können.

Die Luftdurchtrittsöffnungen 33 setzen sich im Inneren des Zellhalterteils 32 in Form von kurzen Stutzen fort. An jedem Stutzen im Bereich der Luftdurchtrittsöffnungen 33 grenzen jeweils drei Rundzellen 11 an. Diese Stutzen dienen dabei sowohl einer Kanalisierung des Luftflusses als auch einer Halterung der Rundzellen 11.

Eine Kontaktierung der Rundzellen 11 erfolgt mithilfe der auf der Oberfläche des jeweiligen Zellhalterteils angeordneten Kontaktierungsbleche 35. Alle Pole einer Polarität sind mit einer Widerstandsschweißung an den Kontaktierungsblechen 35 befestigt.

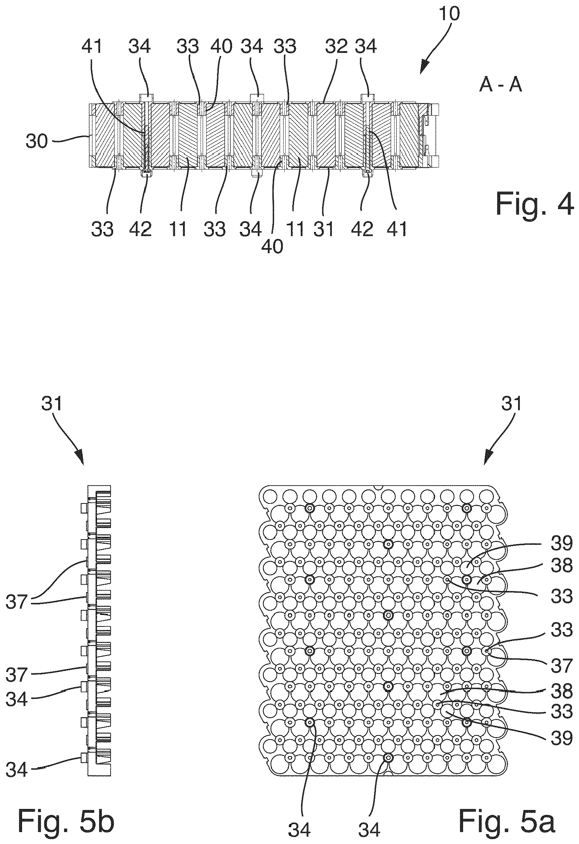

**Fig. 4** zeigt eine Schnittansicht durch den Batterieblock 10 aus Fig. 2 entlang A-A. Zu erkennen ist der aus dem oberen Zellhalterteil 32 und dem unteren Zellhalterteil 31 zusammengesetzte Zellhalter 30. In regelmäßigen Abständen sind in den Zellhalterteilen 31 und 32 die Luftdurchtrittsöffnungen 33 angeordnet, durch die die Luft zwischen den Rundzellen 11 den Batterieblock 10 durchströmen kann. Die Luftdurchtrittsöffnungen setzen sich als kurze Stutzen 40 in das Innere des Zellhalters 30 fort. Die Stutzen 40 dienen neben einer Kanalisierung des Luftstroms einer Halterung der Rundzellen 11. In einigen Bereichen des Zellhalters 30 sind statt der kurzen Stutzen 40 durchgehende Kanäle 41 ausgebildet. Diese Kanäle 41 sind für den Eingriff von selbstschneidenden Schrauben 42 vorgesehen, mit deren Hilfe das obere und das untere Zellhalterteil 32 und 31 miteinander verschraubt werden.

An der Ober- und der Unterseite des Zellhalters 30 befinden sich darüber hinaus einzelne Erhebungen, die als Abstandshalter 34 dienen. Zugleich sind in diesen Bereichen der Abstandshalter 34 die durchgehenden Kanäle 41 für die Verschraubung vorgesehen. Neben den Kanälen für eine Verschraubung des unteren und des oberen Zellhalterteils 31 und 32 miteinander sind an anderen Stellen im Zellhalter 30 weitere durchgehende Kanäle vorhanden, die für eine Verschraubung der Batterieblöcke 10 mit dem Gehäuse 13 vorgesehen sind.

**Fig. 5** zeigt in der Teilansicht A eine Aufsicht auf den unteren Zellhalterteil 31 und in Teilfigur B eine Seitenansicht des unteren Zellhalterteils 31. Zu erkennen ist das Muster der kreisförmigen Aussparungen 38 und 39, wobei die größeren Aussparungen 38 zur Aufnahme der Minuspole der Rundzellen und die kleineren Aussparungen 39 zurAufnahme der Pluspole der Rundzellen vorgesehen sind. Jeweils angrenzend an drei Aussparungen 38, 39 befinden sich die Luftdurchtrittsöffnungen 33, die jeweils von der Lochscheibe 37 umgrenzt sind. Gleichmäßig über die Fläche des Zellhalterteils 31 verteilt sind die Abstandshalter34 in Form von Erhebungen, die gleichzeitig die Bereiche mit durchgehenden Kanälen im Zellblock kennzeichnen, die für eine Fixierung genutzt werden. Die Luftdurchtrittsöffnungen 33 setzen sich in dem Inneren des Zellhalterteils 31 durch die kurzen Stutzen fort.

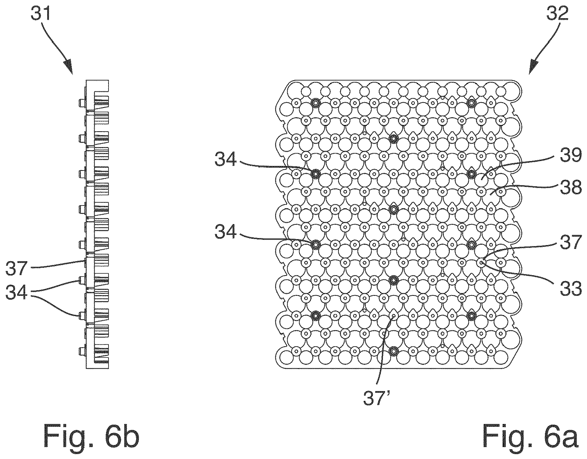

**Fig. 6** zeigt in der Teilfigur A eine Aufsicht auf den oberen Zellhalterteil 32. Die Anordnung der größeren und kleineren kreisförmigen Aussparungen 38, 39 ist vergleichbar mit dem in Fig. 5 gezeigten unteren Zellhalterteil 31, wobei in der zusammengesetzten Position der Zellhalterteile 31 und 32 sich jeweils eine größere Aussparung 38 des einen Zellhalterteils einer kleineren Aussparung 39 des anderen Zellhalterteils gegenüber befindet, so dass eine Rundzelle mit ihrem Minuspol und ihrem Pluspol dazwischen fixiert werden kann. In entsprechender Weise wie in dem unteren Zellhalterteil 31 sind auch in dem oberen Zellhalterteil 32 in regelmäßiger Weise die Luftdurchtrittsöffnungen 33 mit den Lochscheiben 37 verteilt. Einige der Lochscheiben 37 können in Tropfenform 37' ausgestaltet sein, um eine verbesserte Halterung der Rundzellen und gegebenenfalls der Kontaktierungsbleche zu ermöglichen. An entsprechenden Positionen wie bei dem unteren Zellhalterteil 31 befinden sich auch im oberen Zellhalterteil 32 die Abstandshalter 34, die zugleich die Befestigungsmöglichkeiten insbesondere für selbstschneidende Schrauben bieten.

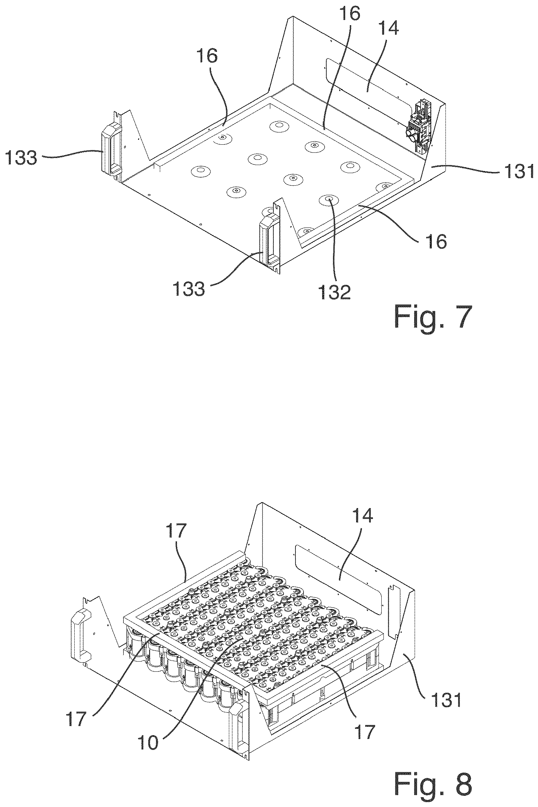

Die Fig. 7 bis 10 illustrieren den gesamten Aufbau des erfindungsgemäßen Batteriemoduls 100 und die Anordnung der Lenkmittel 16, 17 innerhalb des Batteriemoduls. **Fig. 7** zeigt ein unteres Gehäuseteil 131 fürdas Batteriemodul. Eine Schmalseite des unteren Gehäuseteils 131 ist als Seite mit dem Lufteinlass 14 gestaltet. Auf der Fläche des unteren Gehäuseteils 131, die die Unterseite des Batteriemoduls 100 bilden wird, sind mehrere Löcher 132 in Vertiefungen der Gehäusefläche angeordnet, die zur Fixierung bzw. Verschraubung des Batteriemoduls dienen. An der dem Lufteinlass 14 gegenüberliegenden Seite des unteren Gehäuseteils 131 sind zwei Griffe 133 vorgesehen, mit denen das fertig montierte Batteriemodul 100 gehandhabt werden kann.

Auf der Innenseite der Fläche des unteren Gehäuseteils 131 ist ein dreiseitiger Rahmen aus Schaumstoff als Lenkmittel 16 angebracht, zum Beispiel geklebt. Das als dreiseitiger Rahmen ausgebildete Lenkmittel 16 ist an der dem Lufteinlass 14 gegenüber liegenden Seite offen und an den übrigen drei Seiten geschlossen. Dieser dreiseitige Rahmen wirkt als Abdichtmittel und lenkt damit den Luftstrom in der gewünschten Weise.

**Fig. 8** zeigt das untere Gehäuseteil 131 des Batteriemoduls 100, in das ein erster Batterieblock 10 eingesetzt ist. Dieser Batterieblock 10 entspricht in dieser Ausführungsform dem in Fig. 2 im Detail dargestellten Batterieblock 10.

Auf der Oberseite des Batterieblocks 10 ist an drei Seiten ein weiterer dreiseitiger Schaumstoffrahmen als Lenkmittel 17 angeordnet. Dieses Lenkmittel 17 ist zur Seite des Lufteinlasses 14 hin offen und an den übrigen drei Seiten geschlossen.

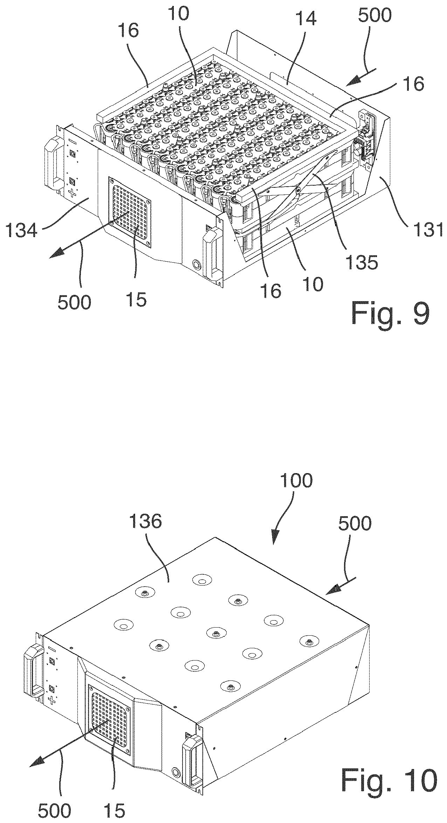

**Fig. 9** zeigt das untere Gehäuseteil 131 mit dem ersten und dem zweiten eingesetzten Batterieblock 10. Weiterhin ist die dem Lufteinlass 14 gegenüberliegende Stirnseite 134 des Gehäuses des Batteriemoduls montiert. An dieser Stirnseite 134 befindet sich der Luftauslass 15. Die beiden übereinanderliegenden Batterieblöcke 10 sind durch Querverstrebungen 135 aneinander fixiert. Auf der Oberseite des zweiten Batterieblocks 10 ist ein weiterer dreiseitiger Schaumstoffrahmen als weiteres Lenkmittel 16 angeordnet. Dieser dreiseitige Rahmen ist zur Seite des Luftauslasses 15 hin offen und an den übrigen drei Seiten geschlossen. Durch die Anordnung der Lenkmittel 16, 17 wird erreicht, dass die Luft über den Lufteinlass 14 in das Batteriemodul zwischen den einzelnen Batterieblöcken 10 hindurch hineingelangt und durch die Batterieblöcke 10 zwischen den einzelnen Rundzellen hindurch in die endständigen Bereiche des Batteriemoduls fließt. Durch die endständigen Freiräume zwischen den jeweiligen Batterieblöcken 10 und den Innenwänden an der Ober- und der Unterseite des Batteriemoduls hindurch gelangt die Luft in Richtung des Luftauslasses 15. Die Richtung des Luftstroms ist durch die Pfeile 500 angedeutet.

**Fig. 10** zeigt das komplett montierte Batteriemodul 100 einschließlich des oberen Gehäuseteils 136. Der Luftstrom 500 kann beispielsweise durch einen saugenden Ventilator im Bereich des Luftauslasses 15 angetrieben werden.

## Patentansprüche

1. Batteriemodul (100) mit Luftkühlung mit den folgenden Merkmalen:
a. das Batteriemodul (100) weist mindestens zwei Batterieblöcke (10) auf,
b. die Batterieblöcke (10) umfassen jeweils eine Mehrzahl von zylindrischen Rundzellen (11), die in entsprechenden Aufnahmen (38, 39, 40) eines Zellhalters (30) angeordnet sind, wobei die Längsachsen der zylindrischen Rundzellen (11) parallel zueinander liegen,
c. in den Zellhaltern (30) sind Luftdurchtrittsöffnungen (33) vorgesehen, durch die Luft die Batterieblöcke (10) parallel zu den Längsachsen der Rundzellen (11) durchströmen kann,
d. die Batterieblöcke (10) sind mit Abstand aufeinandergestapelt, so dass sich zwischen benachbarten Batterieblöcken (10) in dem Stapel jeweils ein Stapelzwischenraum (18) ergibt,
e. das Batteriemodul (100) weist ein Gehäuse (13) auf, das den Stapel aus den Batterieblöcken (10) umfasst, wobei der Stapel von Wänden des Gehäuses (13) beabstandet ist, so dass sich zwischen endständigen Batterieblöcken (10) des Stapels und den Wänden zwei endständige Freiräume (19) ergeben,
f. das Gehäuse (13) weist mindestens einen Lufteinlass (14) und mindestens einen Luftauslass (15) auf,
g. dem Batteriemodul (100) ist ein Ventilator (20) zur Erzeugung eines Luftstroms (500) zwischen dem Lufteinlass (14) und dem Luftauslass (15) zugeordnet,
h. das Batteriemodul (100) weist Lenkmittel (16, 17) auf, die gewährleisten, dass der Luftstrom ausgehend von mindestens einem Stapelzwischenraum (18) zwischen zwei benachbarten Batterieblöcken (10) durch die Luftdurchtrittsöffnungen (33) in den Zellhaltern (30) zwischen den zylindrischen Rundzellen (11) der einzelnen Batterieblöcke (10) hindurch und durch die endständigen Freiräume (19) in Richtung des Luftauslasses (15) geleitet wird.

2. Batteriemodul nach Anspruch 1 mit dem folgenden zusätzlichen Merkmal:
a. die Lenkmittel (16, 17) sind umlaufend an drei Seiten in dem Stapelzwischenraum (18) zwischen zwei aufeinander liegenden Batterieblöcken (10) und/oder umlaufend an drei Seiten in dem endständigen Freiraum (19) zwischen einem endständigen Batterieblock (10) eines Stapels und der Wand des Gehäuses (13) angeordnet.

3. Batteriemodul nach Anspruch 2 mit mindestens einem der folgenden zusätzlichen Merkmale:
a. die Lenkmittel (17) in dem Stapelzwischenraum (18) zwischen zwei aufeinander liegenden Batterieblöcken (10) lassen die Seite des Stapels frei, die dem Lufteinlass (14) des Gehäuses zugewandt ist,
b. die Lenkmittel (16) in dem endständigen Freiraum (19) zwischen einem endständigen Batterieblock (10) des Stapels und den Wänden des Gehäuses (13) lassen die Seite des Stapels frei, die dem Luftauslass (15) des Gehäuses zugewandt ist.

4. Batteriemodul nach einem der vorhergehenden Ansprüche mit dem folgenden zusätzlichen Merkmal:
a. die Lenkmittel (16, 17) sind Abdichtmittel, die von einem flexiblen Material, vorzugsweise von einen aufgeschäumten Kunststoff, gebildet sind.

5. Batteriemodul nach einem der vorhergehenden Ansprüche mit dem folgenden zusätzlichen Merkmal:
a. der Zellhalter (30) eines Batterieblocks ist zweiteilig mit einem ersten Zellhalterteil (32) und einem zweiten Zellhalterteil (31) ausgebildet, wobei der erste Zellhalterteil (32) und der zweite Zellhalterteil (31) jeweils die einander gegenüberliegenden Stirnseiten der Rundzellen (11) eines Batterieblocks (10) umfassen.

6. Batteriemodul nach Anspruch 5 mit dem folgenden zusätzlichen Merkmal:
a. zur Fixierung des ersten Zellhalterteils (32) und des zweiten Zellhalterteils (31) sind Schraubverbindungen (42), insbesondere Schraubverbindungen mit selbstschneidenden Schrauben, vorgesehen.

7. Batteriemodul nach einem der vorhergehenden Ansprüche mit dem folgenden zusätzlichen Merkmal:
a. die Zellhalter (30) weisen Aussparungen (38, 39), insbesondere kreisförmige Aussparungen, zur elektrischen Kontaktierung der Rundzellen (11) auf.

8. Batteriemodul nach einem der vorhergehenden Ansprüche mit dem folgenden zusätzlichen Merkmal:
a. die Bereiche der Luftdurchtrittsöffnungen (33) eines Zellhalters (30) werden jeweils von einem Stutzen (40) zur Ausbildung von Lufteintritts- und Luftaustrittskanälen gebildet, wobei jeweils ein Stutzen (40) an drei Rundzellen (11) des jeweiligen Batterieblocks (10) angrenzt.

9. Batteriemodul nach einem der vorhergehenden Ansprüche mit dem folgenden zusätzlichen Merkmal:
a. an dem den Rundzellen (11) abgewandten Ende des Stutzens (40) ist eine Lochscheibe (37) angeordnet.

10. Batteriemodul nach einem der vorhergehenden Ansprüche mit dem folgenden zusätzlichen Merkmal:
a. die Zellhalter (30) weisen Abstandshalter (34), insbesondere Abstandshalter in Form von Erhebungen, zur Beabstandung von aufeinander gestapelten Batterieblöcken (10) und/oder zur Beabstandung des Stapels aus Batterieblöcken (10) zu Wänden des Gehäuses (13) auf.

11. Batteriemodul nach einem der vorhergehenden Ansprüche mit dem folgenden zusätzlichen Merkmal:
a. die Zellhalter (30) sind aus Kunststoff, insbesondere aus einem Polycarbonat oder einem Gemisch mit Polycarbonat, gefertigt.

12. Batteriemodul nach einem der vorhergehenden Ansprüche mit dem folgenden zusätzlichen Merkmal:
a. die Rundzellen (11) eines Batterieblocks sind in versetzten Reihen angeordnet, wobei die Rundzellen von benachbarten Reihen mit entgegengesetzter Polarität nebeneinander liegen.

13. Batteriemodul nach einem der vorhergehenden Ansprüche mit dem folgenden zusätzlichen Merkmal:
a. die Rundzellen (11) sind sekundäre Lithium-Ionen-Zellen.

14. Zellhalter (30) zur Aufnahme einer Mehrzahl von zylindrischen Rundzellen (11) zur Anordnung der zylindrischen Rundzellen in Form eines Batterieblocks (10) mit den folgenden Merkmalen:
a. der Zellhalter (30) umfasst Aufnahmen (38, 39, 40) zur Halterung der zylindrischen Rundzellen (11), wobei die Längsachsen der zylindrischen Rundzellen (11) parallel zueinander liegen,
b. in dem Zellhalter (30) sind Luftdurchtrittsöffnungen (33) vorgesehen, durch die Luft den Batterieblock (10) parallel zu den Längsachsen der Rundzellen (11) durchströmen kann.

15. Zellhalter nach Anspruch 14, wobei der Zellhalter weiterhin durch mindestens eines der Merkmale gemäß einem der Ansprüche 5 bis 12 gekennzeichnet ist.
